(19) Europäisches Patentamt
European Patent Office
Office européen des brevets

(11) **EP 1 540 296 B1**

(12) **FASCICULE DE BREVET EUROPEEN**

(45) Date de publication et mention
de la délivrance du brevet:
**02.06.2010 Bulletin 2010/22**

(51) Int Cl.:
***G01M 15/00*** *(2006.01)*    ***F02D 41/14*** *(2006.01)*
***F02B 77/08*** *(2006.01)*

(21) Numéro de dépôt: **03769550.9**

(22) Date de dépôt: **02.09.2003**

(86) Numéro de dépôt international:
**PCT/FR2003/002623**

(87) Numéro de publication internationale:
**WO 2004/023089 (18.03.2004 Gazette 2004/12)**

(54) **PROCEDE DE DETECTION DES DEFAUTS DE COMBUSTION D UN MOTEUR A COMBUSTION INTERNE**

VERFAHREN ZUR FEHLERDETEKTION IN EINEM VERBRENNUNGSMOTOR

METHOD FOR FAULT DETECTION IN AN INTERNAL COMBUSTION ENGINE

(84) Etats contractants désignés:
**BE DE ES GB IT**

(30) Priorité: **05.09.2002 FR 0210967**

(43) Date de publication de la demande:
**15.06.2005 Bulletin 2005/24**

(73) Titulaire: **RENAULT S.A.S.**
**92100 Boulogne Billancourt (FR)**

(72) Inventeur: **RENOU, Louis**
**F-75013 Paris (FR)**

(56) Documents cités:
**EP-A- 0 637 738    EP-A- 0 667 516**
**EP-A- 1 052 488    FR-A- 2 723 399**
**US-A- 5 606 119**

Printed by Jouve, 75001 PARIS (FR)

## Description

La présente invention concerne un procédé de détection des défauts de combustion d'un moteur à combustion interne.

1. Etat de la technique

Dans l'état de la technique, on a déjà décrit un problème technique posé particulièrement par le degré de pollution provoqué par les défauts de combustion dans un moteur à combustion interne. Parmi ces défauts de combustion, on compte les ratés de combustion et les combustions tardives.

1.1 Systèmes de détection du couple gaz

Dans deux brevets successifs, FR 91-11273 (publié sous le numéro FR-A-2.681.425, ou EP-B-0.532.419) et FR 91-11274 (publié sous le numéro FR-A-2.681.426 ou EP-B-0.532.420) le demandeur a choisi une technique basée sur la détection du couple gaz pour atteindre l'objectif de réduction de la pollution. On se reportera aux textes de ces brevets pour une définition des techniques de calcul du couple gaz. Particulièrement, dans le brevet EP-B-0.532.419 de la demanderesse intitulé : «PROCEDE ET DISPOSITIF DE MESURE DU COUPLE D'UN MOTEUR THERMIQUE A COMBUSTION INTERNE", il a été décrit un dispositif pour produire une valeur Cg, représentative du couple gaz moyen engendré par chaque combustion du mélange gazeux dans le ou les cylindre(s) d'un moteur thermique à combustion interne. Ce dispositif comprend :

- des repères de mesure disposés sur une couronne solidaire du volant d'inertie du moteur ou solidaire du vilebrequin;
- des moyens pour définir une référence d'indexation par tour de volant ou par tour d'arbre à cames pour les repères ;
- un capteur de défilement des repères, monté fixe au voisinage de la couronne ;
- des moyens pour produire une valeur primaire *di* représentative de la durée de défilement de chacun des repères devant le capteur;
- des moyens pour traiter cette valeur primaire *di* et ainsi produire deux valeurs secondaires respectivement représentatives de la vitesse angulaire moyenne Wm sur des repères au cours d'une période des combustions dans le moteur et, pour la même période de combustion, de la projection Ecos(F), sur la ligne de référence de phase, des groupes de repères respectivement afférents aux combustions dans les différents cylindres du moteur, de la composante alternative E de la vitesse angulaire instantanée W1 des repères, à la fréquence des combustions dans le moteur ;
- des moyens pour combiner ces deux valeurs secondaires, suivant une relation

$$Cg = -a. \, Wm. Ecos(F) + b. \, W12$$

et ainsi produire la valeur recherchée, les termes a et b étant des constantes déterminées expérimentalement.

Dans son brevet FR-A-2.757.945, le même demandeur a défini un procédé de mesure d'un couple gaz qui utilise un dispositif comprenant une cible en forme de couronne, solidaire du volant d'inertie du moteur ou du vilebrequin et dotée de repères sur sa circonférence, des dents par exemple, défilant devant un capteur fixe.

La valeur instantanée de la période de défilement des dents devant le capteur correspond à la mesure de la puissance instantanée produite dans chacun des cylindres du moteur successivement. Des moyens électroniques de calcul utilisent le signal délivré par le capteur pour calculer le couple gaz moyen Cg produit par chaque combustion du mélange gazeux dans chacun des cylindres du moteur.

Dans le cas particulier d'un moteur à essence à quatre cylindres et à quatre temps fonctio.nnant suivant le cycle de Beau de Rochas, chacun des quatre temps du cycle - admission, compression, combustion-détente, échappement - se produit au cours d'un demi-tour particulier du volant d'inertie solidaire du vilebrequin du moteur. L'énergie cinétique acquise par le système concerné, soit le vilebrequin et le volant avec des masses alternatives, est le résultat des différents couples instantanés négatifs et positifs exercés sur lui pendant chacun des différents temps du cycle de fonctionnement du moteur. On calcule le couple gaz Cg à chaque demi-tour. Ce couple est engendré pendant ces phases de compression et de combustion-détente des mélanges gazeux respectivement emprisonnés dans deux cylindres à combustions contiguës (1 et 4, 2 et 3). Les deux autres cylindres sont alors en phases d'admission et d'échappement. Les phases de compression étant moins sujettes à des variations ou à des dispersions que les phases de combustion-détente, on considère que le couple gaz Cg calculé sur un demi-tour est relatif au cylindre en combustion et donc qu'il est une estimation du couple gaz moyen sur les deux phases, compression et combustion-détente, du même cylindre emprisonnant donc le même mélange gazeux.

A titre d'exemple, la cible comporte, sur sa périphérie, 57 dents identiques régulièrement espacées et formées chacune par un créneau et un creux, et une dent de référence, de plus grande largeur équivalant à trois autres dents, servant d'origine d'indexation pour permettre la numérotation desdites dents. Pour un moteur à quatre temps et quatre cylindres, la période angulaire T des combustions concerne 30 dents et est égale à la moitié de la période de rotation du vilebrequin. Pour un moteur à quatre temps et six cylindres, la période angulaire des combustions T ne concerne plus que 20 dents, etc.

Le capteur fixe peut être à réluctance variable, adapté à délivrer un signal alternatif de fréquence proportionnelle à la vitesse de défilement des dents de la couronne, c'est-à-dire proportionnelle à la vitesse instantanée du volant d'inertie.

Le brevet US 5606119 (FR2700363) présente également un procédé pour détecter les ratés de combustion d'un moteur. Selon cette invention, on détermine le couple gaz (Cg) pour chaque combustion dans chaque cylindre, on mesure le régime (N) du moteur et la pression (Pca) au collecteur d'admission d'air pendant la phase d'admission antérieure correspondante, on calcule par interpolation dans une cartographie un couple de référence (Cref) fonction de N et de Pca, on pondère par exemple Cref par produit avec un coefficient (K) associé au cylindre correspondant et/ou au mode de fonctionnement stabilisé ou transitoire du moteur, pour en déduire un couple théorique prévu (Cpr) que l'on compare au couple gaz (Cg) pour considérer qu'il y a un raté de combustion si Cg/Cpr<S2 et si Cpr-Cg > au seuil S3 ou S4, selon que le moteur est en mode transitoire ou stabilisé.

2. Problème technique posé

2.1 Perturbations du vilebrequin

Dans l'état de la technique précité, on s'est aperçu que les mouvements du vilebrequin, et particulièrement à haut régime, sont soumis à des perturbations supplémentaires, dues par exemple à des phénomènes de flexion et de torsion. Comme la couronne dentée du capteur de couple gaz qui sert au procédé de détection des ratés de combustion est liée au vilebrequin, on conçoit que des variations instantanées de vitesse de rotation du vilebrequin puissent influencer la mesure du couple gaz et de ce fait impliquer une mauvaise détection des ratés de combustion.

Notamment, on s'est aperçu que ces perturbations différaient selon le cylindre d'un moteur à plusieurs cylindres. Cette différence de comportement dépend majoritairement du régime moteur, mais aussi de la charge du moteur préférentiellement contrôlée par la mesure de la pression au collecteur. En charge, quand un mécanisme d'injection est appliqué à la combustion sur chaque cylindre, le déphasage diffère entre les cylindres quand la pression au collecteur augmente.

Or, la décision d'activation ou d'inhibition de la détection des ratés de combustion est dans l'état de la technique entièrement dépendant de la qualité de l'apprentissage des seuils permettant d'exécuter cette décision.

2.2 Perturbations de combustion

Sur certains points de fonctionnement, la stabilité de combustion du moteur ne permet pas de séparer nettement les ratés de combustion des combustions tardives qui produisent peu de couple sur le vilebrequin. Le raté de combustion étant qualifié par une absence de combustion dans le cylindre, une telle circonstance augmente sans raison le taux de ratés de combustion défini par le rapport du nombre de détections de ratés de combustion au nombre de détection du point mort haut PMH.

3. Définition de la solution

L'invention apporte remède à ces inconvénients de l'état de la technique. En effet, elle concerne un procédé de détection des défauts de combustion survenant dans au moins un cylindre #i d'un moteur à combustion interne équipant un véhicule automobile ou routier, lors du cycle n de combustion et opérant par analyse des valeurs Cg,n,i d'une grandeur Cg représentative du couple gaz déduite de la rotation du vilebrequin, pour détecter la survenue d'un raté de combustion. Le procédé de l'invention consiste à :

   (a) générer une valeur représentative Cg,n,i d'une grandeur Cg représentative du couple gaz déduite de la rotation du vilebrequin ;
   (b) produire une première valeur de seuil supérieur (H) et une seconde valeur de seuil inférieur (B), les dites première (H) et seconde (B) valeurs de seuil étant relatives au cylindre #i et au cycle #n ;
   (c) détecter lors d'un premier test si ladite valeur représentative Cg,n,i du couple gaz est inférieure à la dite seconde valeur de seuil inférieur (B) de sorte que si le premier test est positif, soit produit un signal de détection d'un raté de combustion ;

(d) si le premier test est négatif, détecter lors d'un second test si ladite valeur représentative Cg,n,i du couple gaz est inférieure à la dite première valeur de seuil supérieur (H) de sorte que si le second test est positif, soit produit un signal d'inhibition de la détection des ratés de combustion ; et

(e) si le second test est négatif, produire un signal d'absence de détection d'un raté de combustion.

Selon un aspect de l'invention, le procédé de détection des défauts de combustion comporte aussi une étape de détermination d'un seuil caractéristique d'une combustion tardive entre les première (H) et seconde (B) valeurs de seuil sur la valeur instantanée du signal représentatif du couple gaz. Le seuil caractéristique d'une combustion tardive est préférentiellement adapté à des instants prédéterminés en fonction des valeurs précédemment acquises dudit signal représentatif du couple gaz de sorte qu'il soit supérieur au seuil prédéterminé caractéristique d'un raté de combustion et de sorte que, si la valeur instantanée du couple gaz Cg est inférieure audit seuil caractéristique d'une combustion tardive, la détente en cours sur au moins un cylindre soit déterminée en combustion tardive.

On remarque que la suspension de la détection des ratés de combustion n'affecte que la valeur de détection du couple gaz Cg, n, i qui est comprise entre les première (H) et seconde (B) valeurs de seuil. Si la détection des ratés de combustion est validée, une action correctrice est effectuée sur le calculateur d'injection associé ou la détection des combustions retardées est effectuée.

D'autres caractéristiques et avantages de la présente invention seront mieux comprise à l'aide de la description et des figures annexées dans lesquelles :

- la figure 1 est un schéma bloc d'un dispositif mettant en oeuvre le procédé de l'invention ;
- la figure 2 est un organigramme d'un mode de réalisation du procédé de l'invention ;
- la figure 3 est un autre graphe des variations de la valeur représentative de la qualité de la combustion avec un deuxième seuil ;
- la figure 4 est un schéma bloc d'une partie du dispositif de mise en oeuvre de la figure 1 ;
- la figure 5 est un schéma bloc d'une autre partie du dispositif de mise en oeuvre de la figure 1 ; et
- la figure 6 est un schéma bloc d'une autre partie du dispositif de mise en oeuvre de la figure 1.

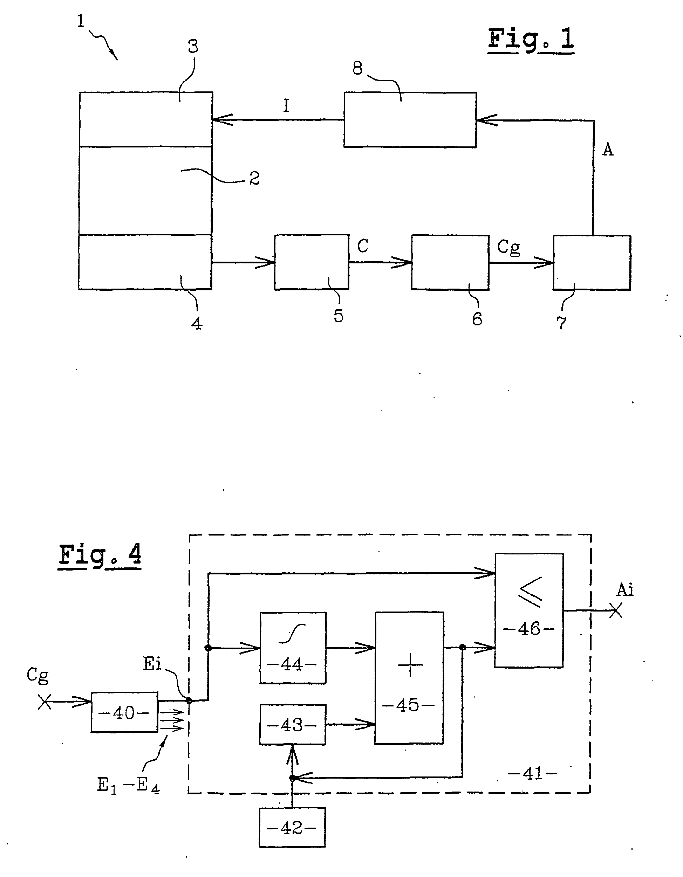

A la figure 1, on a présenté schématiquement un groupe motopropulseur 1 comportant un ensemble de cylindres, préférentiellement quatre cylindres dans une machine à quatre temps dans un cycle Beau de Rochas, alimenté au moyen d'un dispositif d'injection 3 et équipé d'un vilebrequin 4 pour réaliser la transformation de l'énergie générée lors de chaque explosion dans chaque cylindre en énergie mécanique de rotation.

Le vilebrequin 4 est mécaniquement couplé à un capteur de sa vitesse de rotation tel celui décrit dans le préambule de la présente demande. Un tel capteur produit un signal C connecté à l'entrée d'un détecteur du couple gaz 6 qui produit à sa sortie un signal Cg déterminé ainsi qu'il est décrit dans l'état de la technique. Ce signal est adapté par la disposition de marques de référence à transmettre l'information qu'une phase de détente #n associée à un cylindre #i déterminé parmi les quatre cylindres du moteur thermique 1 est en cours. Il est ainsi possible de produire un signal Cg, i, n caractéristique au cours du n-ième cycle de la phase de détente sur le cylindre #i.

Le signal représentatif des variations du couple gaz est aussi un signal représentatif de la qualité de la combustion ainsi qu'il est décrit dans l'état de la technique.

Le signal Cg est présenté à l'entrée d'un calculateur 7 destiné à mettre en oeuvre le procédé de l'invention et qui produit à sa sortie un signal d'autorisation A pour un calculateur d'injection 8 qui détermine les paramètres d'injection en fonction de la détection des ratés de combustion.

Le calculateur d'injection 8 est notamment équipé d'un moyen pour exécuter un procédé de détection des ratés de combustion, et d'un moyen pour produire un signal de commande d'injection 1 à destination de l'ensemble d'injection 3, en réponse à la non détection des ratés de combustion.

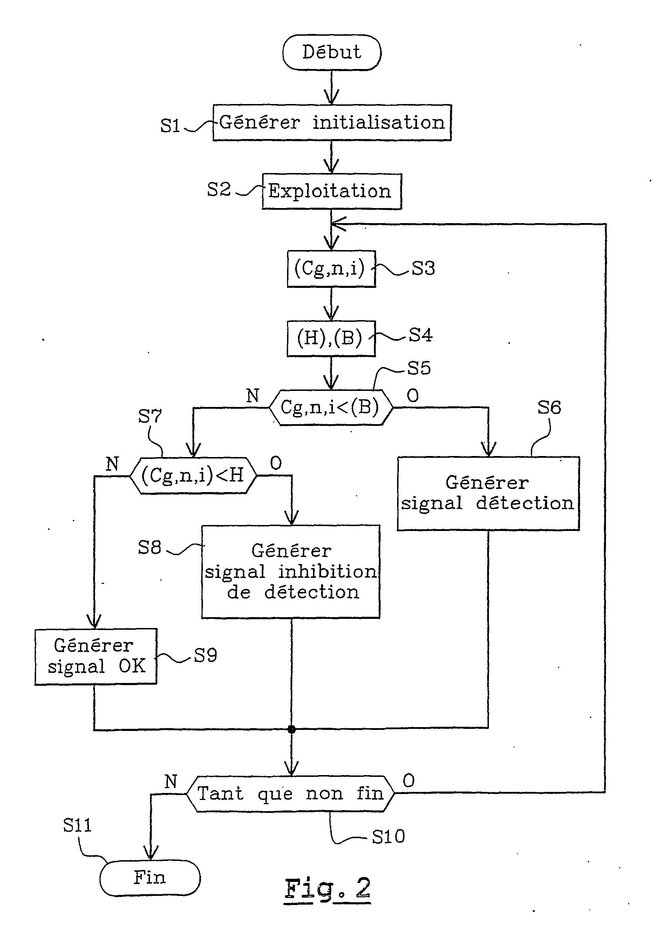

A la figure 2, on a représenté un organigramme du procédé de l'invention dans un mode de réalisation.

Lors d'une étape S1 qui sera détaillée plus loin, le procédé démarre une phase d'initialisation qui peut avoir lieu notamment lors de la personnalisation du véhicule, lors d'une opération de maintenance ou de réparation et. au démarrage du moteur thermique.

Le contrôle passe ensuite à une étape d'exploitation S2 où, pour au moins un cylindre #i d'un moteur à combustion interne équipant un véhicule automobile ou routier, est exécuté le procédé proprement dit pour détecter un raté de combustion survenant lors d'au moins un cycle #n de combustion. Ainsi qu'il a été décrit le procédé opère par analyse des valeurs Cg,n,i de la grandeur Cg représentative du couple gaz déduite de la rotation du vilebrequin.

Lors d'une étape S3 est générée une valeur représentative Cg,n,i d'une grandeur Cg représentative du couple gaz déduite de la rotation du vilebrequin.

Lors d'une étape S4 est produite une première valeur de seuil supérieur H et une seconde valeur de seuil inférieure B relative au cylindre #i et au cycle #n.

Lors d'une étape S5, on exécute un premier test pour déterminer si ladite valeur représentative Cg,n,i du couple gaz est inférieure à la dite seconde valeur de seuil inférieur (B). Dans ce cas, si le premier test est positif, lors d'une étape S6 est produit un signal de détection d'un raté de combustion.

Si le premier test est négatif, lors d'une étape S7, on exécute un second test pour déterminer si ladite valeur représentative Cg,n,i du couple gaz est inférieure à la dite première valeur de seuil supérieur H. Dans ce cas, si le second test est positif, lors d'une étape S8 est produit un signal d'inhibition de la détection des ratés de combustion.

Si le second test est négatif, lors d'une étape S9, est produit un signal d'absence de détection d'un raté de combustion.

Après l'une quelconque des trois étapes S6, S8 ou S9 pour générer un signal d'état de la détection des ratés de combustion, le contrôle passe à une étape de test de fin de contrôle S10. Si le test de fin de contrôle est positif, parce qu'un nouveau cycle moteur doit être surveillé, le contrôle retourne à l'étape S3 d'acquisition de la valeur nouvelle (Cg, i). Si le test de fin de contrôle est négatif, le contrôle passe à une étape de fin de processus S11.

On note que les opérations S3. et S4 sont préférentiellement successives, particulièrement, parce que les valeurs (H) et (B) des seuils supérieur et inférieur sont calculées à l'aide de la valeur en cours déjà acquise de Cg,n,i du couple gaz.

Dans d'autres modes de réalisation, les valeurs (H) et (B) peuvent être calculées par exemple à l'aide d'une fonction prédéterminée d'extrapolation à partir de leurs valeurs précédentes et de plusieurs (p) valeurs antérieures {Cg, n-1, i ; Cg, n-2, i ; ... ; Cg, n-p, i}. Dans ce cas, les deux valeurs de seuil peuvent être calculées avant celle de Cg, n, i ou en même temps.

De même, d'autres méthodes de calcul peuvent être utilisées, les première et seconde valeurs de seuil (H) et B) étant calculées avec une périodicité plus faible que celle des valeurs du Couple gaz Cg.

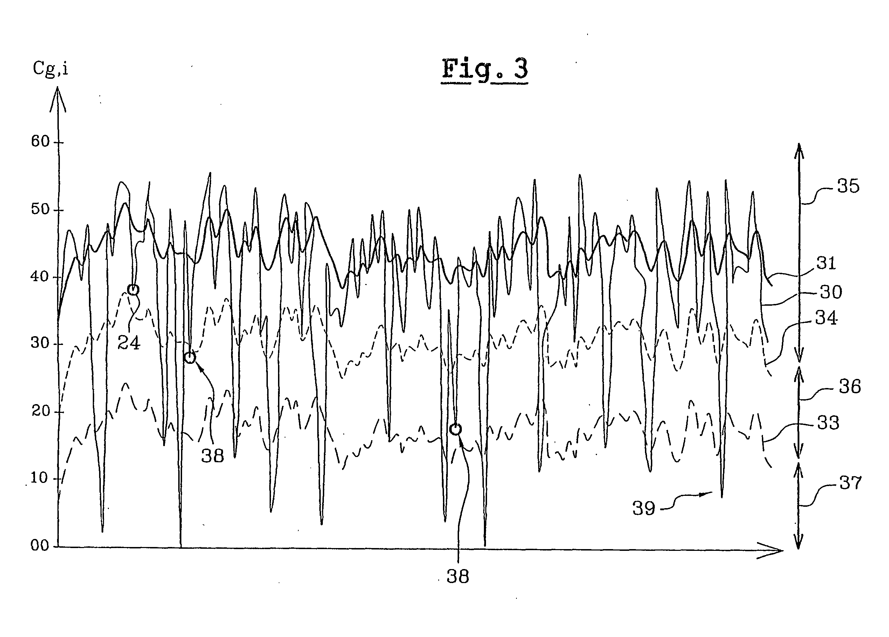

A la Figure 3, on a représenté en abscisse l'axe des temps et en ordonnées les valeurs du couple gaz Cg, i, n associé au cylindre #i parmi les quatre cylindres du moteur 1 de la figure 1.

Les courbes tracées à la Figure 3 sont « continues » alors que, dans le mode de réalisation de l'invention, les valeurs du couple gaz Cg,n,i sont des valeurs numériques échantillonnées à des dates prédéterminées. Les courbes tracées sont des interpolations permettant de suivre plus clairement les diverses collections de valeurs acquises et/ou calculées au cours du temps.

On a représenté quatre courbes successivement :

- une courbe 30 représentative de la valeur instantanée du couple gaz Cg, i produite par le capteur 5 de vitesse de rotation du vilebrequin 4 ;
- une courbe 31 représentative d'une valeur produite après une opération de filtrage du couple représenté à la courbe 30 ;
- une courbe 33 représentative du second seuil inférieur (B) établi pour déterminer les ratés de combustion sur la courbe représentative 30 ;
- une courbe 34 représentative du premier seuil supérieur (H) établi pour déterminer que les ratés de combustion sur la courbe représentative 30 ne sont pas fiables.

Dans un mode préféré de réalisation, le point initial de la courbe pour l'instant T=0 est déterminé par une valeur de seuil en dessous de laquelle on considèrera que la combustion sur le cylindre #i est en état de raté de combustion. La détermination de cette valeur initiale peut particulièrement être réalisée selon l'enseignement du brevet précité FR-A-2.752.018.

A la figure 3, on a représenté notamment un point 39 correspondant à une phase de détente sur un cylindre #i qui est franchement dans une zone de ratés de combustion, sous la courbe 33 du premier seuil inférieur (B).

Pour un tel point 39, le procédé de l'invention consiste à produire un signal de détection de raté de combustion, plus particulièrement, au niveau du calculateur d'injection pour procéder à une action corrective de la détection des ratés de combustion.

A la figure 3, on a aussi représenté un point 24 correspondant à une détente sur le cylindre #i dans laquelle le couple gaz Cg, i est à une valeur légèrement supérieure à la première (H) valeur de seuil instantanée 34.

Dans l'invention, un tel point, comme le point 24, selon les conditions de combustion entraînées par l'ensemble du groupe motopropulseur, est placé dans une zone libre de ratés de combustion, autrement dit, dans une zone dans laquelle on ne peut craindre un raté de combustion.

A la figure 3, on a aussi représenté deux points 38 correspondant à une détente sur le cylindre #i dans laquelle le couple gaz Cg i est à une valeur comprise entre la première (B) et la seconde (H) valeur de seuil instantanée 23.

Dans l'invention, un tel point, comme les points 38, selon les conditions de combustion entraînées par l'ensemble du groupe motopropulseur, est placé dans une zone de non-détection des ratés de combustion et le signal produit transmis au calculateur d'injection commande l'exécution d'une action corrective de la non-détection ou de l'inhibition de la détection des ratés de combustion.

A la figure 3, on remarque que la courbe 33 représentative du second seuil (B) (voir Figure 2) se déduit de la courbe 31 par le fait qu'elle est constituée au seuil initial à T=0 par cette même courbe 31, combinée, lors du fonctionnement du moteur, à une valeur déduite d'une fonction statistique comme un filtrage ou une moyenne glissante. La fonction statistique prédéterminée est effectuée sur un nombre déterminé, adaptable le cas échéant selon les conditions de fonctionnement du groupe motopropulseur, de valeurs précédentes du couple gaz $Cg,j$, $n$ ; $j<i$.

Ainsi, il est possible en faisant varier les conditions de calcul de la moyenne instantanée, par exemple en décidant de prendre plus ou moins de valeurs antérieures sur l'historique du couple $Cg_i$, de réaliser une adaptation en fonction des conditions de fonctionnement du groupe motopropulseur.

En résumé, quand, comme c'est le cas dans les points marqués 38, la détente sur le couple gaz $Cg_i$ se trouve sous le seuil 34, et au-dessus du seuil 33 de raté de combustion, l'état de la combustion est déterminé dans une bande interdite 36 comprise entre une bande de combustion correcte 35 et une bande 37 de ratés de combustion.

Comme pour les seuils caractéristiques d'un raté de combustion 33, le seuil caractéristique de combustion tardive 34 est déterminé à partir de l'instant initial T=0 à l'aide d'un seuil prédéterminé par ces statistiques lors de l'initialisation du calculateur d'injection.

En particulier, le seuil peut être déterminé de la façon qui a été décrite dans le brevet du même demandeur cité à l'occasion de la description du seuil 33.

De la même manière, il est possible de faire varier au cours de l'acquisition de la courbe $Cg$, $n$, $i$ des fonctions de constitution de filtrage sur la courbe 34 de façon à s'adapter à des points de fonctionnement particuliers du moteur.

Le procédé de l'invention peut comporter aussi une étape pour calculer un taux de détection de ratés de combustion.

A la figure 4, on a représenté une première partie du circuit 7 du dispositif de mise en oeuvre du procédé de l'invention. Dans la suite de la description, on comprendra que, quand le circuit est réalisé sur la base d'un moyen informatique numérique, chaque signal correspond à une variable affectée à une zone mémoire gérée par le moyen informatique numérique et présentant une structure définie par avance comme une valeur scalaire, une liste ou un autre objet informatique selon le cas. De même, la référence à une borne d'entrée ou de sortie fait référence alors à un moyen de lecture ou d'écriture associé à une zone mémoire déterminée.

Le signal $Cg$ issu du circuit de détection 6 est entré sur une borne d'entrée convenable du calculateur 7 qui comporte, dans le mode de réalisation de la figure 4, un premier circuit 40 permettant de déterminer dans le signal $Cg$ ce qui correspond au cylindre i pris entre les cylindres de 1 à 4 dans le cas d'un moteur à quatre cylindres.

Le signal $Ei$ est transmis aux entrées respectivement d'un un filtre 44 et d'un circuit de test 46.

La borne de sortie du filtre 44 est connectée à une première borne d'entrée d'un additionneur 45.

L'autre borne d'entrée de l'additionneur 45 est connectée à la borne de sortie d'un circuit générateur d'un seuil adaptatif 43, caractéristique d'une valeur de raté de combustion.

Le circuit 43 est préalablement chargé par un dispositif 42 à la disposition du constructeur du véhicule et/ou d'un garagiste lors d'une maintenance du véhicule pour réaliser un réglage des conditions initiales du circuit de la figure 4.

Le signal de sortie du circuit 43 est ajouté à la valeur filtrée issue du filtre 44 et cette valeur de sortie est transmise à une seconde borne d'entrée de test du circuit de test 46. Le résultat d'addition est écrit comme nouvelle valeur dans le registre 43.

La valeur instantanée du seuil caractéristique d'un raté de combustion est ainsi comparée sur le circuit de test 46 à la valeur présentée sur la borne d'entrée $Ei$ de sorte que si la valeur $Ei$ est inférieure à la valeur instantanée du seuil caractéristique d'un raté de combustion, la borne de sortie du circuit de test 46 passe à l'état actif, donnant une valeur $Ai$ active représentative d'un raté de combustion.

Le procédé de l'invention peut comporter aussi une étape pour calculer un taux de détection de combustions retardées ou tardives.

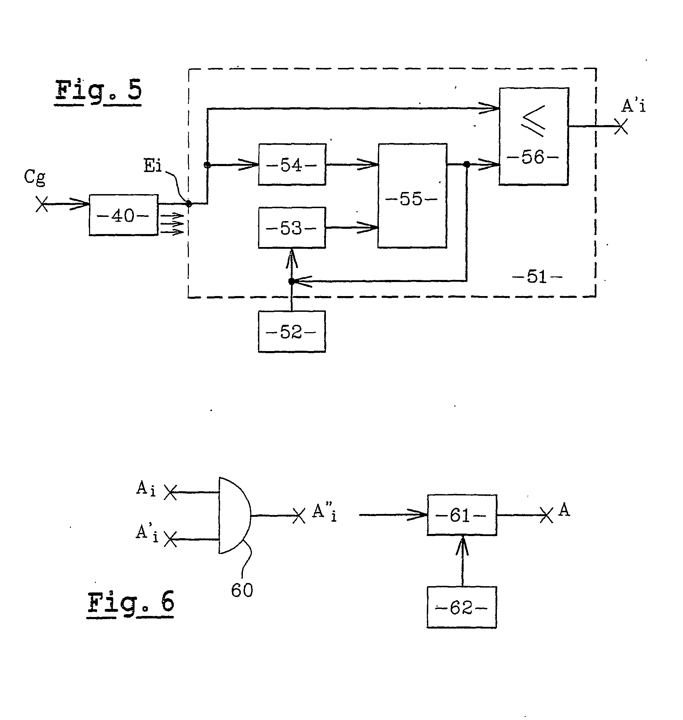

A la figure 5, on a représenté une seconde partie du circuit 7 du dispositif de mise en oeuvre du procédé de l'invention, qui est structurellement identique à la première partie représentée à la figure 4.

Le signal $Cg$ est entré sur le circuit 40 décrit ci-dessus et une borne de sortie $Ei$ de ce circuit est connectée à la borne d'entrée d'un circuit 51 associé au cylindre i de sorte que la valeur du couple gaz associée au cylindre i est transmise à la borne d'entrée d'un intégrateur 54 et d'un circuit de test 56.

La borne de sortie de l'intégrateur 54 est connectée à une première borne d'entrée d'un additionneur 55 dont l'autre borne d'entrée est connectée à un registre de seuil caractéristique 53 d'une valeur de combustion tardive.

De la même manière que pour le circuit 43, le circuit 53 est connecté lors de l'initialisation à un circuit 52 permettant de charger une valeur initiale à T=0 pour le seuil caractéristique de combustion tardive.

La borne de sortie de l'additionneur 55 est simultanément connectée à une borne d'entrée d'écriture du même registre 53 et à une seconde borne d'entrée du circuit de test 56 de sorte que la borne de sortie $Ai$ du circuit de test 56 soit active quand le signal représentatif du couple gaz pour le cylindre i est inférieur à un seuil prédéterminé caractéristique d'une combustion tardive.

Le procédé de l'invention comporte une étape pour calculer un taux de détection de ratés de combustion. Sur une période déterminée :

- un nombre de détentes sur un cylindre donné #i est incrémenté à chaque détection d'un point mort haut sur le cylindre ;
- un nombre de détections de ratés de combustion est incrémenté à chaque détection d'un raté de combustion ;
- le rapport du nombre de détection de ratés de combustion au nombre de détentes est enfin calculé sur la période déterminée.

Ce rapport est un taux de détection de ratés de combustion qui, dans un mode de réalisation, est transmis au calculateur d'injection comme paramètre de contrôle dès que le nombre de détentes a atteint une valeur déterminée. Une fois la valeur courante du taux de détection des ratés de combustion transmise à l'utilisateur (calculateur d'injection) les deux nombres formant le taux sont ré initialisés et le processus recommence.

Particulièrement, lorsque la valeur Cg,n, i est détectée dans la bande morte (ou interdite) lors de l'étape S8, le nombre de ratés de combustion et le nombre de détentes ne sont pas incrémentés.

De la même manière, le procédé de l'invention peut comporter une étape de calcul d'un taux de combustions retardées qui reprend les mêmes étapes que l'étape précitée de calcul d'un taux de ratés de combustion, en remplaçant le nombre de ratés de combustion par le nombre de combustions retardées.

A la figure 6, on a représenté un troisième partie du circuit 7 du dispositif de mise en oeuvre de cette partie du procédé de l'invention.

Les signaux Ai et A'i issus respectivement des circuits 41 et 51 de détection respectivement d'un raté de combustion et d'une combustion tardive sont connectés aux bornes d'entrée d'une porte ET 60.

Quand les deux signaux Ai et A'i sont actifs tous les deux, un signal de sortie A"i de la porte ET 60 est à l'état actif.

Le signal A"i (ou le signal Ai) est connecté à une première borne d'entrée d'un circuit 61 diviseur qui réalise le calcul d'un taux de ratés de combustion.

L'autre borne d'entrée du circuit 61 est connectée à un compteur 62 du nombre de points mort haut PMH réalisés sur une période déterminée.

La borne de sortie du compteur 62 produit un signal représentatif d'un taux de ratés de combustion A réalisé comme le rapport des valeurs numériques successives du signal présenté à la première borne d'entrée sur les valeurs numériques successives du signal présenté à la seconde borne d'entrée.

Le procédé de l'invention peut aussi comporter une étape pour déterminer que les populations en combustion retardée et en raté de combustion ne sont pas assez séparées quand le taux de détection de ratés de combustion et le taux de détection de combustions retardées n'ont pas évolués.

L'ensemble des circuits décrits à l'aide des figures 4 à 7 a été décrit sur la base d'un signal Cg associé à un cylindre #i déterminé. Ces circuits peuvent être répétés pour chaque cylindre du monteur, ou certains d'entre eux seulement, ou encore un séquenceur peut déterminer quel cylindre sera analysé par le dit ensemble de circuits.

Dans un autre mode de réalisation, le procédé de l'invention consiste à comparer le couple mesuré pendant la détente d'un cylindre et deux seuils définis ci-dessus et dépendant d'une valeur statistique de couple sur ce cylindre.

La détente est déclarée en raté de combustion lorsque cet écart est supérieur au seuil et il est ainsi possible à l'aide d'un seul cylindre ou d'une moyenne entre plusieurs cylindres de réaliser une détection d'un raté de combustion ou d'une combustion tardive.

Le procédé de l'invention consiste donc à caractériser les écarts de couple entre chacun des cylindres et Une référence. Une telle référence peut être réalisée sur la base du couple gaz mesuré sur un cylindre particulier, ou sur une valeur moyenne des couples gaz sur l'ensemble des cylindres, ou sur une référence absolue de couple mesurée par un capteur de couple moteur. La référence des écarts de couple est pris pour différents points de fonctionnements répartis dans toute la plage de fonctionnement du moteur. La référence est donc enregistrée dans un mode de réalisation dans une mémoire de cartographie de référence des écarts de couple gaz de sorte que lorsqu'un couple gaz est mesuré il est corrigé par une valeur de décalage issue de l'interpolation dans la cartographie correspondant au cylindre #i dont la détente vient d'être analysée.

Le procédé de l'invention permet donc d'effectuer la détection des défauts de combustion, et notamment des ratés de combustion, de manière fiable à des régimes ou à des charges sur le moteur thermique supérieurs à ceux auxquels elle pouvait s'appliquer dans l'état de la technique puisque l'effet du vilebrequin est maintenant pris en compte.

Bien entendu, l'invention n'est nullement limitée au mode de réalisation décrit et illustré qui n'a été donné qu'à titre d'exemple.

Ainsi, il est possible d'opérer non pas directement sur les' valeurs Cg,n,i mais sur des valeurs filtrées. De même, les valeurs initiales des premier 33 et second 34 seuils peuvent être obtenus selon toutes sortes de stratégies enregistrées dans des mémoires de cartographie (non représentées au dessin) prenant en compte les différents points de fonctionnement du moteur, pourcentages constants du couple gaz nominal, etc.

Pour ce qui est de la mise en oeuvre du dispositif de détection des défauts de combustion, quelle que soit la variante choisie, elle peut être réalisée sous diverses formes :

- soit avec des composants d'électronique analogique pour lesquels les sommateurs, comparateurs et autres filtres sont réalisés à l'aide d'amplificateurs opérationnels ;

- soit avec des composants d'électronique numérique qui réaliseraient la fonction en logique câblée ;
- soit par un algorithme de traitement du signal implanté sous forme d'un module logiciel, composant d'un système logiciel de contrôle moteur faisant fonctionner le microcontrôleur d'un calculateur électronique.
- soit encore, par une puce spécifique (custom) dont les ressources hardware et software auront été optimisées pour réaliser les fonctions objet de l'invention puce microprogrammable ou non, encapsulée séparément ou bien tout ou partie d'un coprocesseur implanté dans un microcontrôleur ou microprocesseur etc.

De même, l'invention comprend tous les équivalents techniques appliqués à un moteur à combustion interne quels que soient son cycle de combustion (2 temps, 4 temps), le carburant utilisé diesel ou essence ou encore le nombre de cylindres.

## Revendications

1. Procédé de détection des défauts de combustion survenant dans au moins un cylindre #i d'un moteur à combustion interne équipant un véhicule automobile ou routier, lors d'au moins un cycle #n de combustion et opérant par analyse des valeurs Cg,n,i d'une grandeur Cg représentative du couple gaz déduite de la rotation du vilebrequin, **caractérisé en ce qu'**il consiste à :

   (a) générer (S2) une valeur représentative Cg,n,i d'une grandeur Cg représentative du couple gaz déduite de la rotation du vilebrequin ;
   (b) produire (S3) une première valeur de seuil supérieur (H) et une seconde valeur de seuil inférieure (B) relative au cylindre i et au cycle n;
   (c) détecter (S4) lors d'un premier test si ladite valeur représentative Cg,n,i du couple gaz est inférieure à la dite seconde valeur de seuil inférieur (B) de sorte que si le premier test est positif, soit produit (S5) un signal de détection d'un raté de combustion ;
   (d) si le premier test est négatif, détecter lors d'un second test (S6) si ladite valeur représentative Cg,n,i du couple gaz est inférieure à la dite première valeur de seuil supérieur (H) de sorte que si le second test est positif, soit produit (S7) un signal d'inhibition de la détection des ratés de combustion première (H) ; et

   si le second test est négatif, produire (S8) un signal d'absence de détection d'un raté de combustion.

2. Procédé de détection des défauts de combustion selon la revendication 1, **caractérisé en ce que** lesdits premier seuil (33) et second seuil (34) sont calculés à l'aide d'une première fonction prédéterminée et d'une seconde fonction prédéterminée, correspondant à un état initial au démarrage et à au moins une fonction de ladite valeur caractéristique de la combustion (Cg,n,i).

3. Procédé de détection des défauts de combustion selon l'une des revendications précédentes, **caractérisé en ce qu'**il comporte une étape pour calculer un taux de détection de ratés de combustion qui consiste, sur une période déterminée :

   - à compter le nombre de détentes sur un cylindre donné #i ;
   - à compter le nombre de détections de ratés de combustion ;
   - à calculer le rapport du nombre de détection de ratés de combustion au nombre de détentes.

4. Procédé de détection des défauts de combustion selon l'une des revendications précédentes, **caractérisé en ce qu'**il comporte aussi une étape de détermination d'un seuil caractéristique d'une combustion tardive entre les première (H) et seconde (B) valeurs de seuil sur la valeur instantanée du signal représentatif du couple gaz, ledit seuil caractéristique d'une combustion tardive étant préférentiellement adapté à des instants prédéterminés en fonction des valeurs précédemment acquises dudit signal représentatif du couple gaz de sorte qu'il soit supérieur au seuil prédéterminé caractéristique d'un raté de combustion et de sorte que, si la valeur instantanée du couple gaz Cg est inférieure audit seuil caractéristique d'une combustion tardive, la détente en cours sur au moins un cylindre soit déterminée en combustion tardive.

5. Procédé de détection des défauts de combustion selon l'une des revendications précédentes, **caractérisé en ce qu'**il comporte une étape pour calculer un taux de détection de combustions retardées qui consiste, sur une période déterminée :

- à compter le nombre de détentes sur un cylindre donné #i ;
- à compter le nombre de détections de combustion retardée ;
- à calculer le rapport du nombre de détections de combustion retardée au nombre de détentes.

6. Procédé de détection des défauts de combustion selon l'une des revendications précédentes, **caractérisé en ce qu'**il comporte une étape pour caractériser les écarts de couple entre chacun des cylindres et une référence, réalisée sur la base du couple gaz mesuré sur un cylindre particulier, ou sur une valeur moyenne des couples gaz sur l'ensemble des cylindres, ou sur une référence absolue de couple mesurée par un capteur de couple moteur, ladite référence des écarts de couple étant prise pour différents points de fonctionnements répartis dans toute la plage de fonctionnement du moteur et enregistrée dans un mode de réalisation dans une mémoire de cartographie de référence des écarts de couple gaz de sorte que, lorsqu'un couple gaz est mesuré, il est corrigé par une valeur de décalage issue de l'interpolation dans la cartographie correspondant au cylindre #i dont la détente vient d'être analysée.

**Claims**

1. Method for detecting combustion faults occurring in at least one cylinder #i of an internal combustion engine fitted to a motor or road vehicle, during at least one combustion cycle #n and working by analysis of the values Cg, n, i of a magnitude Cg representative of the gas torque deduced from the rotation of the crankshaft, **characterized in that** it consists in:

    (a) generating (S2) a representative value Cg, n, i of a magnitude Cg representative of the gas torque deduced from the rotation of the crankshaft;
    (b) producing (S3) a first upper threshold value (H) and a second lower threshold value (B) relative to the cylinder i and to the cycle n;
    (c) detecting (S4) during a first test whether the said representative value Cg, n, i of the gas torque is lower than the said second lower threshold value (B) so that, if the first test is positive, a combustion misfire detection signal is produced (S5);
    (d) if the first test is negative, detecting, during a second test (S6), whether the said representative value Cg, n, i of the gas torque is lower than the said first upper threshold value (H) so that, if the second test is positive, a combustion misfire detection disable signal is produced (S7); and
    (e) if the second test is negative, producing (S8) a signal for the absence of combustion misfire detection.

2. Method for detecting combustion faults according to Claim 1, **characterized in that** the said first threshold (33) and second threshold (34) are computed with the aid of a first predetermined function and of a second predetermined function, corresponding to an initial state on start-up and to at least one function of the said characteristic value of the combustion (Cg, n, i).

3. Method for detecting combustion faults according to one of the preceding claims, **characterized in that** it comprises a step for computing a combustion misfire detection rate which consists, over a determined period:

    - in counting the number of expansions on a given cylinder #i;
    - in counting the number of combustion misfire detections;
    - in computing the ratio of the number of combustion misfire detections to the number of expansions.

4. Method for detecting combustion faults according to one of the preceding claims, **characterized in that** it also comprises a step of determining a characteristic threshold of a delayed combustion between the first threshold value (H) and second threshold value (B) on the instantaneous value of the signal representative of the gas torque, the said characteristic threshold of a delayed combustion preferably being adapted to predetermined moments according to the values previously acquired of the said signal representative of the gas torque so that it is higher than the predetermined threshold characteristic of a combustion misfire and so that, if the instantaneous value of the gas torque Cg is lower than the said characteristic threshold of a delayed combustion, the current expansion on at least one cylinder is determined as delayed combustion.

5. Method for detecting combustion faults according to one of the preceding claims, **characterized in that** it comprises a step for computing a delayed combustion detection rate which consists, over a determined period:

- in counting the number of expansions on a given cylinder #i;
- in counting the number of delayed combustion detections;
- in computing the ratio of the number of delayed combustion detections to the number of expansions.

**6.** Method for detecting combustion faults according to one of the preceding claims, **characterized in that** it comprises a step for characterizing the differences of torque between each of the cylinders and a benchmark, produced on the basis of the gas torque measured on a particular cylinder, or on a mean value of the gas torques on all of the cylinders, or on an absolute benchmark of torque measured by an engine torque sensor, the said benchmark of the differences of torque being taken for different points of operation distributed throughout the whole range of operation of the engine and recorded, in one embodiment, in a benchmark mapping memory of the gas torque differences so that, when a gas torque is measured, it is corrected by a value of difference originating from the interpolation in the map corresponding to the cylinder #i the expansion of which has just been analyzed.

**Patentansprüche**

**1.** Verfahren zur Erfassung der Verbrennungsfehler, die in mindestens einem Zylinder #i eines ein Kraftfahrzeug oder Straßenfahrzeug bestückenden Verbrennungsmotors in mindestens einem Verbrennungszyklus #n auftreten, und das durch Analyse der Werte Cg,n,i einer repräsentativen Größe Cg des Gasmoments arbeitet, die von der Drehung der Kurbelwelle abgeleitet wird, **dadurch gekennzeichnet, dass** es darin besteht:

(a) einen repräsentativen Wert Cg,n,i einer repräsentativen Größe Cg des Gasmoments zu erzeugen (S2), die von der Drehung der Kurbelwelle abgeleitet wird;
(b) einen ersten oberen Schwellwert (H) und einen zweiten unteren Schwellwert (B) bezüglich des Zylinders i und des Zyklus n zu erzeugen (S3);
(c) bei einem ersten Test (S4) zu erfassen, ob der repräsentative Wert Cg,n,i des Gasmoments unter dem zweiten unteren Schwellwert (B) liegt, damit, wenn der erste Test positiv ist, ein Signal der Erfassung eines Verbrennungsfehlers erzeugt wird (S5);
(d) wenn der erste Test negativ ist, bei einem zweiten Test (S6) zu erfassen, ob der repräsentative Wert Cg,n, i des Gasmoments unter dem ersten oberen Schwellwert (H) liegt, damit, wenn der zweite Test positiv ist, ein Sperrsignal der Erfassung der Verbrennungsfehler erzeugt wird (S7); und
(e) wenn der zweite Test negativ ist, ein Signal der nicht vorhandenen Erfassung eines Verbrennungsfehlers zu erzeugen (S8).

**2.** Verfahren zur Erfassung der Verbrennungsfehler nach Anspruch 1, **dadurch gekennzeichnet, dass** der erste Schwellwert (33) und der zweite Schwellwert (34) mit Hilfe einer ersten vorbestimmten Funktion und einer zweiten vorbestimmten Funktion berechnet werden, die einem Anfangszustand beim Start und mindestens einer Funktion des charakteristischen Werts (Cg,n,i) der Verbrennung entsprechen.

**3.** Verfahren zur Erfassung der Verbrennungsfehler nach einem der vorhergehenden Ansprüche, **dadurch gekennzeichnet, dass** es einen Schritt aufweist, um einen Erfassungsgrad von Verbrennungsfehlern zu berechnen, der über einen bestimmten Zeitraum darin besteht:

- die Anzahl von Entspannungen in einem gegebenen Zylinder #i zu zählen,
- die Anzahl von Erfassungen von Verbrennungsfehlern zu zählen;
- das Verhältnis der Anzahl von Erfassungen von Verbrennungsfehlern zur Anzahl von Entspannungen zu berechnen.

**4.** Verfahren zur Erfassung der Verbrennungsfehler nach einem der vorhergehenden Ansprüche, **dadurch gekennzeichnet, dass** es auch einen Schritt der Bestimmung eines charakteristischen Schwellwerts einer verspäteten Verbrennung zwischen dem ersten (H) und zweiten Schwellwert (B) auf den Augenblickswert des repräsentativen Signals des Gasmoments aufweist, wobei der charakteristische Schwellwert einer verspäteten Verbrennung vorzugsweise an vorbestimmte Augenblicke in Abhängigkeit von den vorher erfassten Werten des repräsentativen Signals des Gasmoments angepasst wird, damit er höher ist als der vorbestimmte charakteristische Schwellwert eines Verbrennungsfehlers, und damit, wenn der Augenblickswert des Gasmoments Cg unter dem charakteristischen Schwellwert einer verspäteten Verbrennung liegt, die laufende Entspannung in mindestens einem Zylinder in verspäteter Verbrennung bestimmt wird.

**5.** Verfahren zur Erfassung der Verbrennungsfehler nach einem der vorhergehenden Ansprüche, **dadurch gekennzeichnet, dass** es einen Schritt aufweist, um einen Erfassungsgrad von verzögerten Verbrennungen zu berechnen, der über einen bestimmten Zeitraum darin besteht:

- die Anzahl von Entspannungen in einem gegebenen Zylinder #i zu zählen;
- die Anzahl von Erfassungen einer verzögerten Verbrennung zu zählen;
- das Verhältnis der Anzahl von Erfassungen einer verzögerten Verbrennung zur Anzahl von Entspannungen zu berechnen.

**6.** Verfahren zur Erfassung der Verbrennungsfehler nach einem der vorhergehenden Ansprüche, **dadurch gekennzeichnet, dass** es einen Schritt aufweist, um die Momentabweichungen zwischen jedem der Zylinder und einem Bezugswert zu charakterisieren, der auf der Basis des an einem bestimmten Zylinder gemessenen Gasmoments, oder eines Mittelwerts der Gasmomente über die Gesamtheit der Zylinder, oder eines absoluten Momentbezugswerts durchgeführt wird, der von einem Drehmomentsensor gemessen wird, wobei der Bezugswert der Momentabweichungen für verschiedene Arbeitspunkte genommen wird, die im ganzen Arbeitsbereich des Motors verteilt sind, und in einer Ausführungsform in einem Bezugskennfeldspeicher der Gasmomentabweichungen gespeichert ist, so dass, wenn ein Gasmoment gemessen wird, es durch einen Verschiebungswert korrigiert wird, der aus der Interpolation im Kennfeld entsprechend dem Zylinder #i stammt, dessen Entspannung analysiert wurde.

## Fig. 1

## Fig. 4

$$\text{Début}$$

S1 — Générer initialisation

S2 — Exploitation

$(Cg,n,i)$ — S3

$(H),(B)$ — S4

S5

N — $Cg,n,i<(B)$ — O

S7 — N — $(Cg,n,i)<H$ — O

S6 — Générer signal détection

S8 — Générer signal inhibition de détection

Générer signal OK — S9

N — Tant que non fin — O

S10

S11 — Fin

**Fig. 2**

Fig. 3

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9111273
- FR 2681425 A
- EP 0532419 B
- FR 9111274
- FR 2681426 A
- EP 0532420 B
- FR 2757945 A
- US 5606119 A
- FR 2700363
- FR 2752018 A